# EUROPÄISCHE PATENTSCHRIFT

(11) **EP 0 605 502 B1**
(45) Veröffentlichungstag und Bekanntmachung des Hinweises auf die Patenterteilung: **30.10.1996**
(21) Anmeldenummer: 92919571.7
(22) Anmeldetag: 16.09.1992
(51) Int. Cl.: C11D 3/12, C01B 39/00

(54) **FLÜSSIGES ODER PASTENFÖRMIGES WASCH- ODER REINIGUNGSMITTEL**
WASHING OR CLEANING AGENT IN LIQUID OR PASTE FORM
AGENT DE LAVAGE OU DE NETTOYAGE LIQUIDE OU PATEUX

(30) Priorität: 25.09.1991 DE 4131906
(43) Veröffentlichungstag der Anmeldung: 13.07.1994
(73) Patentinhaber: Henkel Kommanditgesellschaft auf Aktien, 40191 Düsseldorf (DE)
(72) Erfinder: BEAUJEAN, Hans-Josef, D-4047 Dormagen (DE); ARTIGA GONZALES, Rene-Andres, D-4000 Düsseldorf 13 (DE); BODE, Jens, D-4000 Düsseldorf 1 (DE)
(86) Internationale Anmeldenummer: EP9202117
(87) Internationale Veröffentlichungsnummer: WO9306201

(56) Entgegenhaltungen:
- EP-A- 0 425 149
- CH-A- 306 975
- DE-A- 2 510 676
- GB-A- 2 217 727

## Beschreibung

Die Erfindung betrifft ein Verfahren zur Stabilisierung von hydratisiertem Zeolith, ein stabiles, flüssiges oder pastenförmiges, im wesentlichen wasserfreies Wasch- oder Reinigungsmittel, welches Zeolith NaA und Bleichmittel enthält, sowie ein Verfahren zu seiner Herstellung.

Nichtwäßrige Flüssigwaschmittel und flüssige Reinigungsmittel, die feinteilige Buildersubstanzen enthalten, sind in großer Zahl bekannt. Aus Gründen der Anwendungssicherheit liegen solche Mittel in der Regel als stabilisierte homogene Suspensionen vor. Als besonderer Vorteil nichtwäßriger Mittel ist die im Vergleich mit wäßrigen Formulierungen relativ problemlos mögliche Einarbeitung von aktivsauerstoffhaltigen Bleichmitteln zu erwähnen. Allerdings wurde insbesondere bei Verwendung von Zeolithen als Buildersubstanzen in derartigen Mitteln eine nicht tolerierbare Abnahme an Bleichmittelaktivsubstanz während der Lagerung beobachtet. Dies wird, wie beispielsweise in der europäischen Patentanmeldung EP 425 149 ausgeführt, allgemein auf eine durch die Zeolithoberfläche hervorgerufene Zersetzung des Bleichmittels zurückgeführt, die mit steigendem Wassergehalt des Zeoliths zunimmt und bei wasserfreien Zeolithen normalerweise nicht auftritt. Synthetische Zeolithe, unter denen Zeolith NaA als Buildersubstanz in Wasch- und Reinigungsmitteln eine herausragende Stellung einnimmt, fallen im Rahmen ihrer Herstellung normalerweise als mehr oder weniger vollständig hydratisierte Pulverprodukte an. So kann der Wasseranteil in Zeolith NaA bis zu etwa 25 Gew.-% betragen und liegt üblicherweise bei etwa 20 Gew.-%.

Aus der europäischen Patentanmeldung EP 364 184 sind nicht-wäßrige flüssige Reinigungsmittel bekannt, die desaktiviertes Alumosilikat und gegebenenfalls Bestandteile enthalten, die sich üblicherweise in Gegenwart von Alumosilikaten leicht zersetzen, beispielsweise Bleichmittel. Die Desaktivierung des Alumosilikats wird im Rahmen eines relativ aufwendigen zweistufigen Verfahrens vorgenommen, das die Behandlung mit einer Ammoniumverbindung und anschließendes Erhitzen, vorzugsweise auf Temperaturen von 400 °C bis 450 °C, umfaßt. Durch die Hitzebehandlung wird mindestens ein Teil des im Alumosilikat enthaltenen Hydratationswassers entfernt. Insbesondere bei Zeolith A besteht bei derartigen Temperaturen die Gefahr der zumindest partiellen Zerstörung der Zeolith-Struktur und einer damit verbundenen Abnahme der Builderqualität des behandelten Materials ("Übertrocknen").

Die britische Patentanmeldung GB-A-2 217 727 beschreibt ein Verfahren zur Herstellung von stabilisiertem, synthetischem, hydratisiertem Zeolith NaA, wobei 20-Teile Zeolith mit 75 bis 95 Teilen ethoxyliertem Alkohol behandelt werden. Durch die Anwesenheit relativ großer Mengen an derartigem ethoxylierten Alkohol bringt man bei der Verwendung des so hergestellten stabilisierten Zeoliths zur Herstellung fertiger Wasch- oder Reinigungsmittel nichtionisches Tensid in nicht immer gewollt großen Mengen in solche Mittel ein.

Die schweizerische CH-A-306 975 betrifft die Herstellung von mit fettlösenden Substanzen durchtränktem Aluminium- und/oder Magnesiumsilikat, bei der das imprägnierte Produkt so weit getrocknet wird, bis das imprägnierte Pulver äußerlich trocken erscheint. Durch den Trocknungsschritt wird eine eventuell zwischenzeitlich auftretende Inertisierung des silikatischen Materials wieder aufgehoben.

In der europäischen Patentanmeldung EP-A-425 149 wird ein wasserfreier zeolithischer Waschmittelbuilder durch Erhitzen unter Vakuum und im wesentlichen vollständiges Entwässern eines wasserhaltigen Zeoliths, beispielsweise Zeolith A, hergestellt. Dies kann in Gegenwart bestimmter Polyether oder Polyalkohole erfolgen oder derartige Substanzen werden dem dehydratisierten Zeolith anschließend zugesetzt. Die Buildersubstanzen können in stabiler Weise in nicht-wäßrige, bleichmittelhaltige Flüssigwaschmittel eingearbeitet werden, jedoch wird die Herstellung derartiger Mittel durch den relativ aufwendigen Trocknungsschritt verkompliziert.

Es bestand daher nach wie vor die Aufgabe, ein einfaches Herstellungsverfahren für stabile zeolith- und bleichmittelhaltige flüssige Wasch- oder Reinigungsmittel zu entwickeln, welches den Einsatz üblichen hydratisierten Zeoliths erlaubt.

Überraschenderweise wurde nun gefunden, daß ein System aus Bleichmittel und hydratisiertem Zeolith NaA durch das Behandeln des Zeoliths mit organischen Flüssigkeiten, die eine gewisse Polarität aufweisen und im folgenden als Inertisierungsmittel bezeichnet werden, sehr effektiv stabilisiert werden kann. Die stabilisierende Wirkung des Inertisierungsmittels betrifft sowohl die Bleichmittelkomponente der Zubereitung, welche nach Lagerung signifikant geringere Bleichwirkstoffabnahmen als in nicht-stabilisierten Mitteln aufweist, als auch das gesamte pastöse oder flüssige Mittel, welches keine Neigung zu Phasentrennung oder Separation von Feststoffbestandteilen zeigt.

Gegenstand der Erfindung ist somit ein Verfahren zur Herstellung von stabilisiertem synthetischem hydratisiertem Zeolith NaA, das dadurch gekennzeichnet ist, daß man den Zeolith mit der 3-fachen bis 10-fachen Menge, bezogen auf sein Gewicht, eines bei Raumtemperatur und Normaldruck flüssigen, organischen, polaren Inertisierungsmittel tränkt, welches ein aliphatischer oder aromatischer Kohlenwasserstoff, ein Polydiol, ein Ester aus einer Carbonsäure mit 1 bis 3 C-Atomen und einem Alkohol mit 1 bis 4 C-Atomen, eine Carbonsäure mit 1 bis 3 C-Atomen oder ein Gemisch aus diesen ist, und das bei 20 °C eine Dielektrizitätskonstante von mindestens 2,3 aufweist. Vorzugsweise wird das flüssige Inertisierungsmittel anschließend soweit entfernt, bis das Gewichtsverhältnis Zeolith zu Inertisierungsmittel 1:1 bis 1:5 beträgt. Man erhält dann Zeolith-Pasten, die in der Regel rühr- und gießfähig sind.

Ein weiterer Gegenstand der Erfindung ist ein Verfahren zur Herstellung eines flüssigen bis pastenförmigen, stabilen, bleichmittelhaltigen, im wesentlichen wasserfreien Wasch- oder Reinigungsmittels, welches dadurch gekennzeichnet ist, daß man eine Menge von 10 Gew.-Teilen bis 30 Gew.-Teilen synthetischem hydratisiertem Zeolith NaA mit der 3-fachen bis 10-fachen Menge, bezogen auf das Gewicht des Zeoliths, eines bei Raumtemperatur und Normaldruck flüssigen, organischen, polaren Inertisierungsmittels tränkt, das bei 20 °C bis 25 °C eine Dielektrizitätskonstante von mindestens 2,3 aufweist, das flüssige Inertisierungsmittel gegebenenfalls soweit entfernt, bis das Gewichtsverhältnis Zeolith zu Inertisierungsmittel 1:1 bis 1:5 beträgt, eine Menge von 100 Gew.-Teilen bis 150 Gew.-Teilen anionisches und/oder nichtionisches Tensid, eine Menge von 10 Gew.-Teilen bis 30 Gew.-Teilen Bleichmittel, eine Menge von bis zu 10 Gew.-Teilen Bleichaktivator und gegebenenfalls weitere Wasch- oder Reinigungsmittelinhaltsstoffe zumischt, wobei sämtliche Verfahrensschritte bei Raumtemperatur beziehungsweise der sich durch die Mechanikeinwirkung während des Mischvorgangs ergebenden Temperatur des flüssigen oder pastenförmigen Mittels durchgeführt werden.

Ein weiterer Gegenstand der Erfindung ist ein flüssiges bis pastenförmiges, bleichmittelhaltiges, im wesentlichen wasserfreies Wasch- oder Reinigungsmittel, enthaltend Zeolith NaA sowie anionisches und/oder nichtionisches Tensid, welches 5 Gew.-% bis 20 Gew.-% hydratisierten Zeolith NaA, über 50 Gew.-% bis 80 Gew.-% anionisches und/oder nichtionisches Tensid, 5 Gew.-% bis 20 Gew.-% aktivsauerstoffhaltiges Bleichmittel, bis zu 6 Gew.-% Bleichaktivator sowie bis zu 6 Gew.-% Cobuilder und/oder Komplexbildner für Schwermetalle enthält, wobei das System aus Bleichmittel und Zeolith durch Tränken des Zeoliths mit einem bei Raumtemperatur und Normaldruck flüssigen, organischen, polaren Inertisierungsmittel, welches ein aliphatischer oder aromatischer Kohlenwasserstoff, ein Polydiol, ein Ester aus einer Carbonsäure mit 1 bis 3 C-Atomen und einem Alkohol mit 1 bis 4 C-Atomen, eine Carbonsäure mit 1 bis 3 C-Atomen oder ein Gemisch aus diesen ist, und das bei 20 °C bis 25 °C eine Dielektrizitätskonstante von mindestens 2,3 aufweist, stabilisiert ist.

Die Dielektrizitätskonstante ist, wie beispielsweise in Organic Solvents-Physical Properties and Methods of Purification von J.A. Riddick, W.B., Bunger, T.K. Sakano, Verlag John Wiley & Sons, 4. Auflage 1986, Seite 59, erläutert, ein dimensionsloses Maß für den relativen Effekt, den ein Lösungsmittel auf die Kraft ausübt, mit der sich zwei gegensinnig geladene Platten anziehen. Für ein Valuum ist sie als 1 definiert.

Die Formulierung "im wesentlichen wasserfrei" bedeutet im Rahmen der vorliegenden Erfindung, daß die erfindungsgemäßen Mittel kein freies, nicht als Kristallwasser oder in vergleichbarer Form gebundenes Wasser enthalten.

Das erfindungsgemäße Verfahren wird vorzugsweise derart ausgeführt, daß der Zeolith über einen Zeitraum, der mindestens 2 Minuten, insbesondere 3 bis 5 Minuten beträgt, mit dem flüssigen Inertisierungsmittel getränkt wird, was bedeutet, daß der Zeolith während dieser Zeit in seiner Gesamtheit von der Flüssigkeit bedeckt ist. Gewünschtenfalls kann die Mischung aus vorzugsweise 15 Gew.-Teilen bis 25 Gew.-Teilen Zeolith und 45 Gew.-Teilen bis 250 Gew.-Teilen Inertisierungsmittel während des Tränkens gerührt oder einer Ultraschallbehandlung unterzogen werden, um den gleichmäßigen Zutritt des Inertisierungsmittels zur Zeolithoberfläche zu gewährleisten. Dabei ist weitgehend unerheblich, ob der Zeolith vorgelegt oder zum Inertisierungsmittel gegeben wird. Vorzusgweise wird, insbesondere bei Einsatz von Flüssigkeiten relativ geringer Dichte, der Zeolith in das Inertisierungsmittel eingerührt. Anschließend wird das Inertisierungsmittel gegebenenfalls soweit entfernt, daß das Gewichtsverhältnis von Zeolith zu Inertisierungsmittel 5:1 bis 1:1, vorzugsweise 4:1 bis 1,1:1 beträgt. Dies geschieht vorzugsweise durch einfaches Abfiltrieren, wobei der Filtriervorgang gewünschtenfalls durch Anlegen eines schwachen Vakuums auf Filtratseite in üblicher Weise beschleunigt werden kann. Insbesondere in letzterem Fall ist darauf zu achten, daß die Filtration so rechtzeitig abgebrochen wird, daß keine Trocknung erfolgt und möglichst keine Luft durch den inertisierten Zeolith gesaugt wird, um ein Verdampfen des Inertisierungsmittels von der Zeolithoberfläche zu vermeiden. Der so inertisierte Zeolith wird in einem üblichen Mischer mit den weiteren Bestandteilen vermischt, wobei die Mischungsreihenfolge in der Regel nicht wesentlich ist. Vorzugsweise wird der inertisierte Zeolith zuerst mit den flüssigen und anschließend mit den weiteren festen Bestandteilen vermischt, insbesondere wird die Tensidkomponente vorgelegt, der inertisierte Zeolith wird zugesetzt und anschließend werden das Bleichmittel, gewünschtenfalls der Bleichaktivator sowie gegebenenfalls weitere Bestandteile eingemischt. Vorzugsweise werden 120 Gew.-Teile bis 150 Gew.-Teile Tensid, 12 Gew.-Teile bis 25 Gew.-Teile Bleichmittel und 4 Gew.-Teile bis 8 Gew.-Teile Bleichaktivator, bis zu 15 Gew.-Teile, insbesondere 1 Gew.-Teil bis 10 Gew.-Teile Cobuilder und/oder Komplexbildner für Schwermetalle, bis zu 15 Gew.-Teile, insbesondere 3 Gew.-Teile bis 10 Gew.-Teile Waschalkalien sowie bis zu 5 Gew.-Teile, insbesondere 1 Gew.-Teil bis 3 Gew.-Teile Enzym, insbesondere Protease, Amylase, Lipase oder deren Gemische, eingesetzt.

Im übrigen ist darauf zu achten, daß sämtliche Verfahrensschritte des erfindungsgemäßen Verfahrens bei Raumtemperatur beziehungsweise der sich durch die Mechanikeinwirkung während des Mischvorgangs ergebenden Temperatur des flüssigen oder pastenförmigen Mittels durchgeführt werden, die gegebenenfalls durch Kühlen der verwendeten Mischvorrichtung vorzugsweise nicht über 40 °C beträgt, damit die Inhaltstoffe des erfindungsgemäßen Mittels, insbesondere Zeolith und Bleichmittel, nicht geschädigt werden.

Bei den im Rahmen der Erfindung eingesetzten hydratisierten Zeolithen handelt es sich um übliche mikrokristalline Alumosilikat-Pulver der ungefähren Summenformel Na₁₂[(AlO₂)₁₂(SiO₂)₁₂] · 27 H₂O, wie sie nach den in den deutschen Patentschriften DE 24 12 837 und DE 24 12 838 beschriebenen Verfahren erhalten werden können. Dabei kann der Natriumgehalt um in der Regel nicht mehr als 10 % von dem in der Idealformel angegebenen Wert abweichen. Größere Schwankungen können beim Kristallwassergehalt des Zeoliths auftreten, so daß der Wassergehalt der in dem erfindungsgemäßen Verfahren einsetzbaren hydratisierten Zeolithe etwa 17 Gew.-% bis etwa 25 Gew.-% betragen kann. Die Mengenangaben für den Zeolith NaA beziehen sich demgemäß auf derartig hydratisierten Zeolith. Das Calciumbindevermögen der Zeolithe, das nach den Angaben der deutschen Patentschrift DE 24 12 837 bestimmt werden kann, liegt vorzugsweise im Bereich von 100 bis 200 mg CaO/g. Die Zeolithe weisen in der Regel mittlere Teilchengrößen unter 10 µm, insbesondere von 3 µm bis 5 µm auf, wie sie nach bekannten Methoden, beispielsweise unter Verwendung eines sogenannten Coulter Counters, bestimmt werden können.

Als Inertisierungsmittel mit einer Dielektrizitätskonstante von mindestens 2,3, vorzugsweise 3 bis 35 bei 20 °C bis 25 °C kommen aliphatische oder aromatische Kohlenwasserstoffe, Polydiole, Ester aus Carbonsäuren mit 1 bis 3 C-Atomen und Alkoholen mit 1 bis 4 C-Atomen, Carbonsäuren mit 1 bis 3 C-Atomen oder Gemische aus diesen in Frage. Bevorzugte Kohlenwasserstoff-haltige Inertisierungsmittel sind solche, die einen flüssigen aromatischen Kohlenwasserstoff in Form eines Alkylbenzols mit insgesamt 1 bis 3 C-Atomen im Alkylrest beziehungsweise in den Alkylresten enthalten, unter denen zum Beispiel Toluol und Xylole zu nennen sind. Unter den Polydiol-haltigen Inertisierungsmitteln sind solche bevorzugt, die ein bei Raumtemperatur flüssiges Di- oder Oligomeres von Propylenglykol oder Ethylenglykol, insbesondere ein flüssiges Polyethylenglykol mit einem Molekulargewicht im Bereich von 180 bis 650, vorzugsweise im Bereich von 350 bis 450, enthalten. Bevorzugte Ester-haltige Inertisierungsmittel sind solche, die einen flüssigen Ester aus Kohlensäure, Ameisensäure oder Essigsäure und einem linearen primären Alkohol mit 2 bis 4 C-Atomen, zu denen beispielsweise Ethylacetat und Propylencarbonat gehören, enthalten. Zusätzlich enthält das Inertisierungsmittel vorzugsweise bis zu 2 Gew.-%, insbesondere 0,1 Gew.-% bis 1 Gew.-%, jeweils bezogen auf gesamtes Inertisierungsmittel, mindestens einer Carbonsäure mit 1 bis 3 C-Atomen, beispielsweise Ameisensäure, Essigsäure, Propionsäure oder Oxalsäure, unter denen Essigsäure besonders bevorzugt ist.

Das Inertisierungsmittel kann wasserunlöslich oder vorzugsweise wasserlöslich sein. Unter wasserlöslich werden im Rahmen der Erfindung solche Inertisierungsmittel verstanden, die bei Raumtemperatur mindestens 10 gewichtsprozentige wäßrige Lösungen ergeben. Wasserlösliche Inertisierungsmittel weisen in der genannten Konzentration vorzugsweise einen pH-Wert im Bereich von 3 bis 7 auf. Durch die Alkalität des zu inertisierenden Zeoliths weisen die Mischungen aus derartigem Inertisierungsmittel und Zeolith einen pH-Wert (10 Gew.-% in Wasser) von in der Regel über 8 auf.

Bei den erfindungsgemäß brauchbaren nichtionischen Tensiden handelt es sich vorzugsweise um die Additionsprodukte von 3 bis 20 Molequivalenten Ethylenoxid an langkettige primäre oder sekundäre Alkohole mit 8 bis 20 C-Atomen, vorzugsweise 10 bis 18 C-Atomen. Insbesondere werden Additionsprodukte aus 4 bis 10 mol Ethylenoxid an 1 mol gesättigten oder ungesättigten Fettalkohol mit 12 bis 18 C-Atomen oder Oxoalkohol dieser Kettenlänge eingesetzt. Beispiele für derartige Tenside sind Kokosalkohol C_{12/14} + 3 E0 (Ethylenoxid), Kokosalkohol C_{12/18} + 5 EO und Oleyl-Cetylalkohol + 10 EO, sowie Oxoalkohol C_{11/13} + 7 EO. Als weitere nichtionische Tenside sind in erster Linie die Additionsprodukte von Ethylenoxid an Polypropylenoxid oder an Fettsäuren, Fettsäureamide oder Alkylphenole mit 12 bis 18 C-Atomen, sowie die Alkylglykoside, beispielsweise die aus Glukose und langkettigen primären Alkoholen zugänglich Alkylglucoside beziehungsweise Al-kylpolyglucoside zu nennen. Vorzugsweise enthalten die Alkylglykoside 10 bis 14 C-Atome im Alkoholteil und 1 bis 3 Glykoseeinheiten pro Molekül. Auch nichtionische Tenside vom Typ der Aminoxide, beispielsweise N-Kokosalkyl-N,N-dimethylaminoxid und N-Talgalkyl-N,N-dihydroxyethylaminoxid, und der Fettsäurealkanolamide können geeignet sein. Derartige nichtionische Tenside sind in den erfindungsgemäßen Mitteln vorzugsweise in Mengen von 30 Gew.-% bis 75 Gew.-%, insbesondere in Mengen von 40 Gew.-% bis 60 Gew.-% enthalten.

Geeignete synthetische anionische Tenside sind insbesondere solche vom Typ der Sulfonate und Sulfate. Als Tenside vom Sulfonattyp kommen Alkylbenzolsulfonate mit einem C₉₋₁₅-Alkylrest, Olefinsulfonate, das heißt Gemische aus Alken- und Hydroxyalkansulfonaten sowie Disulfonaten, wie man sie beispielsweise aus C₁₂₋₁₈-Monoolefinen mit end- oder innenständiger Doppelbindung durch Sulfonieren mit gasförmigem Schwefeltrioxid und anschließende alkalische oder saure Hydrolyse der Sulfonierungsprodukte erhält, in Betracht. Geeignet sind auch die Alkansulfonate, die aus C₁₂-C₁₈-Alkanen durch Sulfochlorierung oder Sulfoxidation und anschließende Hydrolyse bzw. Neutralisation oder durch Bisulfitaddition an Olefine erhältlich sind, sowie die Ester von α-Sulfofettsäuren, wie z. B. die α-sulfonierten Methyl- oder Ethylester der hydrierten Kokos-, Palmkern- oder Talgfettsäuren. Geeignete Tenside vom Sulfattyp sind die Schwefelsäuremonoester von primären Alkoholen natürlichen oder synthetischen Ursprungs, das heißt von Fettalkoholen wie z.B. Kokosfett-, Talgfett-, Oleyl-, Lauryl-, Myristyl-, Palmityl- oder Stearylalkohol oder den C₁₀-C₂₀-0xoalkoholen oder sekundären Alkoholen dieser Kettenlänge. Auch die Schwefelsäuremonoester der mit 1 bis 6 Molequivalenten Ethylenoxid alkoxylierten aliphatischen primären Alkohole beziehungsweise ethoxylierten sekundären Alkohole sind geeignet. Ferner eignen sich sulfatierte Fettsäurealkanolamide und sulfatierte Fettsäuremonoglyceride. Als anionische Tenside auf natürlicher Roh-stoffbasis sind insbesondere die waschaktiven Seifen, das heißt die Salze der C₁₂-C₁₈-Fettsäuren zu nennen. Die anionischen Tenside liegen in den erfindungsgemäßen Mitteln vorzugsweise in Form ihrer Natriumsalze oder in Form der löslichen Salze mit organischen Basen, insbesondere Mono-, Di- und Triethanolamin vor. Die Menge der anionischen Tenside ist in den erfindungsgemäßen Mitteln vorzugsweise nicht größer als die Menge der nichtionischen Tenside, insbesondere beträgt sie weniger als die Hälfte der nichtionischen Tenside. Ein bevorzugter Gehalt an anionischem Tensid liegt zwischen 5 und 20 Gew.-%, bezogen auf das gesamte Mittel.

Zusätzlich können die erfindungsgemäßen Mittel geringe Mengen weiterer Tenside, insbesondere solche des Betain-Typs, enthalten. Bei den Betaintensiden handelt es sich vorwiegend um langkettige quartäre Ammoniumverbindungen, in denen einer der kürzeren Alkylsubstituenten eine anionische Gruppe, meist eine Carboxylgruppe, enthält. Ein Beispiel eines Betaintensids ist N,N-Dimethyl-N-kokosalkylaminoacetat. Derartige amphotere Tenside sind in den erfindungsgemäßen Mitteln vorzugsweise nicht über 10 Gew.-%, insbesondere von 1 Gew.-% bis 5 Gew.-% enthalten.

Die als weitere Komponente der erfindungsgemäßen flüssigen bis pastenförmigen Wasch- oder Reinigungsmittel eingearbeiteten aktivsauerstoffhaltigen Bleichmittel sind vorzugsweise anorganische Peroxide, die sich im Mittel in ungelöster, das heißt suspendierter Form befinden. Inbesondere kommen Perborat-Tetrahydrat, Perborat-Monohydrat und das Addukt von H₂O₂ an Natriumcarbonat, das auch als Percarbonat bezeichnet wird, zum Einsatz, wobei deren Natriumsalze bevorzugt sind. Die festen anorganischen Peroxide werden in dem erfindungsgemäßen Verfahren vorzugsweise in sehr feinteiliger Form eingesetzt. Ihr Gehalt in den erfindungsgemäßen Mitteln beträgt vorzugsweise 5 Gew.-% bis 20 Gew.-%, insbesondere 6 Gew.-% bis 15 Gew.-%.

Zur Stärkung der Bleichwirksamkeit der erfindungsgemäßen Mittel können diese neben anorganischem Peroxid Bleichaktivatoren enthalten. Es handelt sich dabei um Acylierungsmittel, die mit Wasserstoffperoxid in der Waschlauge zu Peroxicarbonsäuren bzw. deren Salzen reagieren. Beispiele gebräuchlicher Bleichaktivatoren sind Tetraacetylethylendiamin, Pentaacetylglucose und Diacetyldioxohexahydrotriazin. Neben N-Acylverbindungen und 0-Acylverbindungen können auch Anhydride zum Einsatz kommen. Vorzugsweise werden solche Bleichaktivatoren verwendet, die im flüssigen Anteil des erfindungsgemäßen Mittels weitgehend ungelöst bleiben und deshalb überwiegend in suspendierter Form vorliegen. Die Menge an Bleichaktivatoren beträgt vorzugsweise nicht mehr als 6 Gew.-%, insbesondere von 1 Gew.-% bis 5 Gew.-%, bezogen auf das gesamte Mittel.

Obwohl die erfindungsgemäßen Mittel vorzugsweise als Gerüstsubstanz allein den Zeolith NaA enthalten, können daneben auch weitere organische und/oder anorganische, lösliche oder unlösliche Gerüstsubstanzen, sogenannte Cobuilder, enthalten sein. Die Menge dieser zusätzlichen Gerüstsubstanzen liegt im allgemeinen unter der Menge an Zeolith und beträgt vorzugsweise bis zu 6 Gew.-%, insbesondere von 1 Gew.-% bis 5 Gew.-%, jeweils bezogen auf das gesamte Mittel.

Als Cobuilder in den erfindungsgemäßen Mitteln sind insbesondere die alkalisch reagierenden Salze, insbesondere Alkalisalze zu erwähnen, die nicht nur Calciumionen auszufällen oder komplex zu binden vermögen, sondern möglichst auch mit den Tensiden eine synergistische Steigerung der Waschkraft bewirken und ein Schmutztragevermögen besitzen. Von den anorganischen Salzen sind die wasserlöslichen Alkalimeta- oder Alkalipolyphos-phate, insbesondere das Pentanatriumtriphosphat, immer noch von Bedeutung. Zu den organischen Buildersubstanzen gehören Sequestriermittel vom Typ der Aminopolycarbonsäuren, wie zum Beispiel Nitrilotriessigsäure, Ethylendiamintetraessigsäure, sowie deren höhere Homologe. Geeignete phosphorhaltige organische Komplexbildner sind die wasserlöslichen Salze der Alkanpolyphosphonsäuren, Amino- und Hydroxyalkanpolyphosphonsäuren und Phosphonopolycarbonsäuren, wie beispielsweise Methandiphosphonsäure, Dimethylaminomethan-1,1-diphosphonsäure, Aminotrimethylenphosphonsäure, Ethylendiamintetramethylenphosphonsäure, Diethylentriaminpentamethylenphosphonsäure, 1-Hydroxyethan1,1-diphosphonsäure und 2-Phosphonobutan-1,2,4-tricarbonsäure. Diese Sequestriermittel können auch in kleineren Mengen als Komplexbildner für Schwermetalle und damit Stabilisatoren für Perverbindungen enthalten sein. Unter den organischen Gerüstsubstanzen sind die N- und P-freien, mit Calciumionen Komplexsalze bildenden Polycarbonsäuren von besonderer Bedeutung. Dazu gehören niedermolekulare Verbindungen, wie zum Beispiel Zitronensäure, 2,2'-0xydibernsteinsäure oder Carboxymethyloxybernsteinsäure, und polymere Polycarbonsäuren mit einem Molekulargewicht von 350 bis etwa 1 500 000 in Form der wasserlöslichen Salze. Besonders bevorzugte polymere Polycarboxylate haben ein Molekulargewicht im Bereich von 500 bis 175 000, und insbesondere im Bereich von 10 000 bis 100 000. Dazu gehören Verbindungen wie beispielsweise Polyacrylsäure, Poly-alphahydroxyacrylsäure und Polymaleinsäure sowie die Copoymerisate der entsprechenden monomeren Carbonsäuren untereinander, insbesondere aus Acrylsäure und Maleinsäure, oder mit anderen ethylenisch ungesättigten Verbindungen, wie zum Beispiel mit Vinylmethylether. Daneben sind auch die wasserlöslichen Salze der Polyglyoxylsäure zu erwähnen. Weitere Gerüstsubstanzen, die oft auch wegen ihrer hydrotropen Eigenschaften eingesetzt werden, sind die Salze der nicht kapillaraktiven, 2 bis 9 C-Atome enthaltenden Sulfonsäuren, Carbonsäuren und Sulfocarbonsäuren, beispielsweise die Alkalisalze der Alkan-, Benzol-, Toluol-, Xylol- oder Cumolsulfonsäuren, der Sulfobenzoesäuren, Sulfophthalsäure, Sulfoessigsäure, Sulfobernsteinsäure sowie die Salze der Essigsäure oder Milchsäure.

Als weitere Inhaltsstoffe geeignete anorganische, nicht komplexbildende Salze sind die - auch als "Waschalkalien" bezeichneten - Bicarbonate, Carbonate, Borate, Sulfate oder Silikate der Alkalimetalle. Derartige Waschalkalien sind in den erfindungsgemäßen Mitteln vorzugsweise nicht über 10 Gew.-%, insbesondere von 1 Gew.-% bis 8 Gew.-%, enthalten.

Außer den bereits genannten Bestandteilen können die erfindungsgemäßen Mittel weitere Wirkstoffe und Hilfsstoffe enthalten, wie sie in flüssigen und pastösen Wasch- und Reinigungsmitteln gebräuchlich sind, sofern diese weiteren Inhaltsstoffe die Stabilität der Mittel nicht beeinträchtigen. Als derartige Bestandteile sind in erster Linie Schaumregulatoren, Vergrauungsinhibitoren, optische Aufheller, Waschkraftverstärker, Enzyme, Farbstoffe, Parfüme, anorganische Salze und Konservierungsmittel zu nennen. Der Gesamtgehalt derartiger Wirk- und Hilfsstoffe beträgt in den erfindungsgemäßen Mitteln im allgemeinen nicht mehr als 10 Gew.-%, vorzugsweise von 1 Gew.-% bis 5 Gew.-%, wobei die einzelnen Komponenten gelöst oder suspendiert in den Mitteln vorliegen können.

Als Schaumregulatoren sind beispielsweise die Salze von Fettsäuren mit 20 bis 24 C-Atomen oder langkettige N-Alkylaminotriazine mit im wesentlichen 8 bis 18 C-Atomen im Alkylrest oder aliphatische C₁₈-C₄₀-Ketone zu nennen. Bevorzugt werden Paraffin- und Siliconöldispersionen, die gegebenenfalls mit mikrofeiner Kieselsäure konfektioniert sein können. Ihr Gehalt kann, beispielsweise bei Seifen, bis zu 5 Gew.-% des gesamten Mittels betragen, bei den Paraffinen und Siliconölen üblicherweise wesentlich weniger, insbesondere 0,05 Gew.-% bis 0,5 Gew.-%.

Als Vergrauungsinhibitoren sind vor allem polymeres Vinylpyrrolidon und Celluloseether, wie Carboxymethylcellulose, Methylcellulose, Hydroxyalkylcellulosen und Mischether, wie Methylhydroxyethylcellulose, Methylhydroxypropylcellulose und Methyl-Carboxymethylcellulose zu erwähnen, ferner Gemische verschiedener Celluloseether, insbesondere Gemische aus Carboxymethylcellulose und Methylcellulose.

Für Waschmittel besonders geeignete optische Aufheller sind Alkalisalze der 4,4-Bis-(2"-anilino-4"-morpholino-1,3,5-triazinyl-6"-amino)stilben2,2'-disulfonsäure oder gleichartig aufgebaute Verbindungen, die anstelle der Morpholinogruppe eine Diethanolaminogruppe tragen. Weiterhin kommen Aufheller vom Typ der substituierten Diphenylstyryle in Frage, z. B. die Alkalisalze des 4,4'-Bis-(2-sulfostyryl)-diphenyls, 4,4'-Bis-(4-chlor-3-sulfostyryl)-diphenyls und 4-(4-Chlorstyryl-4'-(2-sulfostyryl)-diphenyls.

Bei Waschkraftverstärkern handelt es sich in der Regel um polare langkettige Verbindungen, die selbst keine oberflächenaktiven Eigenschaften besitzen, aber in der Lage sind, die Reinigungswirkung von in den Mitteln enthaltenen Tensiden zu erhöhen. Beispiele derartiger Verbindungen sind Kokosamin + 2 E0 und die Additionsprodukte aus Glycerin und langkettigem α-Olefinepoxid.

Als Enzyme kommen insbesondere solche aus der Klasse der Proteasen, Lipasen und Amylasen beziehungsweise deren Gemische in Frage. Besonders geeignet sind aus Bakterienstämmen oder Pilzen, wie Bacillus subtilis, Bacillus licheniformis, Bacillus lentus und Streptomyces griseus gewonnene enzymatische Wirkstoffe. Die Enzyme können in üblicher Weise an Trägerstoffen adsorbiert oder in Hüllsubstanzen eingebettet sein, um sie gegen vorzeitige Zersetzung zu schützen.

Die Viskosität des fertigen Mittels hängt in erster Linie vom Verhältnis der festen zu den flüssigen Inhaltsstoffen im fertigen Mittel und von der Viskosität der flüssigen Phase ab. Diese wiederum läßt sich durch Wahl geeigneter Bestandteile in weiten Grenzen variieren. So kann beispielsweise durch Zusatz organischer Lösungsmittel die Viskosität erniedrigt und durch Zusatz verdickend wirkender Bestandteile, wie etwa Seifen, die Viskosität erhöht werden. Flüssige erfindungsgemäße Mittel haben vorzugsweise Viskositäten zwischen etwa 1 000 mPas und etwa 5 000 mPas, insbesondere zwischen etwa 2 000 mPas und etwa 4 000 mPas, wobei die Viskosität mit Hilfe eines Brookfield-Viskosimeters bei 20 °C gemessen werden kann. Die Viskositäten der Mittel in Pastenform, die wegen ihrer besonders hohen physikalischen Stabilität bevorzugt werden, gehen weit darüber hinaus und liegen vorzugsweise im Bereich von über 20 000 mPas.

Die erfindungsgemäßen Mittel sind in erster Linie für den Einsatz in der Textilwäsche bestimmt. Je nach Gehalt an Wirkstoffen können sie dabei als Alleinwaschmittel oder aber als Waschzusatzmittel eingesetzt werden. Sie eignen sich aber bei entsprechender Wahl der Wirkstoffe auch zur Reinigung von harten Oberflächen im Haushalt oder im gewerblichen Bereich. Als zusätzlicher Vorteil ist zu werten, daß sich die Mittel, bedingt durch die Stabilität der-Suspensionen, auch automatisch dosieren lassen.

### Beispiele

### Beispiel 1:

50 g Zeolith NaA (Wessalith^{(R)} P, Hersteller Degussa), der einen Wassergehalt von 20 Gew.-% (ermittelt durch den Glühverlust bei 800 °C/1 Stunde)

**Tabelle 1:**

| Mittel-Zusammensetzung [Gew.-%] | |
|---|---|
| Zeolith | 10 |
| Nio-Tensid^{a)} | 51 |
| Aniontensid^{b)} | 12 |
| Na-Perborat^{c)} | 10 |
| TAED^{d)}-Pulver | 3 |
| Na₂CO₃ | 7 |
| Na₂SO₄ | 1 |
| Polycarboxylat^{e)} | 2 |
| Phosphonat^{f)} | 2 |
| Protease^{g)} | 1,5 |
| Entschäumer^{h)} | 0,5 |

| | |
|---|---|
| a) 2:1 Gemisch aus 3-fach ethoxyliertem C_{12/15}-Fettalkohol und 7-fach ethoxyliertem C_{12/18}-Fettalkohol | |
| b) Sekundäres Alkansulfonat (Hostapur^{(R)} SAS, Hersteller Hoechst) | |
| c) Monohydrat | |
| d) N,N,N',N'-Tetraacetylethylendiamin | |
| e) Sokalan^{(R)} CP5, Hersteller BASF | |
| f) Aminotrimethylenphosphonsäure | |
| g) Alcalase^{(R)} 2,55, Hersteller Novo | |
| h) Silikonöl VP 1132, Hersteller Wacker | |

aufwies, wurde in 200 g eines Gemischs aus Polyethylenglykol (Molgewicht etwa 400) und Essigsäure (Gewichtsverhältnis 100:1) eingerührt. Nach 4 Minuten wurde der behandelte Zeolith abfiltriert. Man erhielt 75 g eines mit Flüssigkeit durchsetzten Produkts, das mit den weiteren in Tabelle 1 genannten Stoffen in den aufgeführten Mengen vermischt wurden. Dabei wurde das Nio-Tensid-Gemisch vorgelegt, der inertisierte Zeolith, das Aniontensid, Perborat, TAED, das Polycarboxylat, das Phosphonat, die Protease und der Entschäumer zugemischt und anschließend wasserfreies Natriumcarbonat und Natriumsulfat zugefügt. Man erhielt ein erfindungsgemäßes pastenförmiges Mittel (M1) einer Viskosität von 22 500 mPas. Unter den gleichen Bedingungen wurden unter Einsatz der weiteren in Tabelle 2 angegebenen Inertisierungsmittel die erfindungsgemäßen pastenförmigen Mittel M2 bis M8 erhalten. Zum Vergleich wurde unter Einsatz von nicht inertisiertem Zeolith NaA ein Mittel V1 ansonsten gleicher Zusammensetzung hergestellt.

**Tabelle 2:**

| Eingesetzte Inertisierungsmittel | |
|---|---|
| Inertisierungsmittel | für Mittel |
| - | **V1** |
| Polydiol^{a)} + Essigsäure | **M1** |
| Polydiol^{a)} | **M2** |
| Benzin^{b)} + Essigsäure | **M3** |
| Toluol | **M4** |
| Toluol + Essigsäure | **M5** |
| Ethylacetat | **M6** |
| Ethylacetat + Essigsäure | **M7** |
| Propylencarbonat | **M8** |
| Propylencarbonat + Essigsäure | **M9** |

| | |
|---|---|
| a) Polyethylenglykol, Molgewicht etwa 400 | |
| b) Petrolether, Siedebereich 40 - 110 °C | |

Die in Tabelle 2 aufgeführten Essigsäure-haltigen Inertisierungsmittel enthielten 1 Gew.-% Essigsäure, bezogen auf gesamtes Inertisierungsmittel.

### Beispiel 2

Die gemäß Beispiel hergestellten Mittel wurden bei Raumtemperatur in verschlossenen Gefäßen (Schraubdeckelgläsern) gelagert. Dabei zeigten die erfindungsgemäßen Mittel erst nach 8 Wochen eine geringe Abnahme der Aktivsauerstoffkonzentration (bestimmt durch Titration einer Probe mit 0,1 N KMnO₄), während das den nicht inertisierten Zeolith enthaltende Mittel schon nach 4 Wochen eine Abnahme des Aktivsauerstoffgehaltes erkennen ließ.

**Tabelle 3:**

| Aktivsauerstoffgehalt [% der Ausgangskonzentration] | | | |
|---|---|---|---|
| Mittel | Aktivsauerstoffgehalt nach | | |
| | 4 Wochen | 6 Wochen | 8 Wochen |
| **M1** | 100 | 100 | 93 |
| **M2** | 100 | 100 | 89 |
| **M3** | 100 | 100 | 93 |
| **V1** | 94 | 86 | 86 |

## Patentansprüche

1. Verfahren zur Herstellung von stabilisiertem, synthetischem, hydratisiertem Zeolith NaA, dadurch gekennzeichnet, daß man den Zeolith mit der 3-fachen bis 10-fachen Menge, bezogen auf sein Gewicht, eines bei Raumtemperatur und Normaldruck flüssigen, organischen, polaren Inertisierungsmittels tränkt, welches ein aliphatischer oder aromatischer Kohlenwasserstoff, ein Polydiol, ein Ester aus einer Carbonsäure mit 1 bis 3 C-Atomen und einem Alkohol mit 1 bis 4 C-Atomen, eine Carbonsäure mit 1 bis 3 C-Atomen oder ein Gemisch aus diesen ist, und das bei 20 °C eine Dielektrizitätskonstante von mindestens 2,3 aufweist.

2. Verfahren nach Anspruch 1, dadurch gekennzeichnet, daß man das flüssige Inertisierungsmittel anschließend soweit entfernt, bis das Gewichtsverhältnis Zeolith zu Inertisierungsmittel 1:1 bis 1:5 beträgt.

3. Verfahren zur Herstellung eines pastenförmigen, stabilen, bleichmittelhaltigen, im wesentlichen wasserfreien Wasch- oder Reinigungsmittels, dadurch gekennzeichnet, daß man
(a) eine Menge von 10 Gew.-Teilen bis 30 Gew.-Teilen synthetischem hydratisiertem Zeolith NaA mit
(b) der 3-fachen bis 10-fachen Menge, bezogen auf das Gewicht des Zeoliths, eines bei Raumtemperatur und Normaldruck flüssigen, organischen, polaren Inertisierungsmittels tränkt, welches ein aliphatischer oder aromatischer Kohlenwasserstoff, ein Polydiol, ein Ester aus einer Carbonsäure mit 1 bis 3 C-Atomen und einem Alkohol mit 1 bis 4 C-Atomen, eine Carbonsäure mit 1 bis 3 C-Atomen oder ein Gemisch aus diesen ist, und das bei 20 °C bis 25 °C eine Dielektrizitätskonstante von mindestens 2,3 aufweist,
(c) das flüssige Inertisierungsmittel soweit entfernt, bis das Gewichtsverhältnis Zeolith zu Inertisierungsmittel 5:1 bis 1:1 beträgt,
(d) eine Menge von 100 Gew.-Teilen bis 150 Gew.-Teilen anionisches und/oder nichtionisches Tensid,
(e) eine Menge von 10 Gew.-Teilen bis 30 Gew.-Teilen Bleichmittel,
(f) eine Menge von bis zu 10 Gew.-Teilen Bleichaktivator und
(g) gegebenenfalls weitere Wasch- oder Reinigungsmittelinhaltsstoffe zumischt,
wobei sämtliche Verfahrensschritte bei Raumtemperatur beziehungsweise der sich durch die Mechanikeinwirkung während des Mischvorgangs ergebenden Temperatur des flüssigen oder pastenförmigen Mittels durchgeführt werden.

4. Verfahren nach Anspruch 3, dadurch gekennzeichnet, daß 15 Gew.-Teile bis 25 Gew.-Teile Zeolith, 45 Gew.-Teile bis 250 Gew.-Teile Inertisierungsmittel, 120 Gew.-Teile bis 150 Gew.-Teile Tensid, 12 Gew.-Teile bis 25 Gew.-Teile Bleichmittel und 4 Gew.-Teile bis 8 Gew.-Teile Bleichaktivator, bis zu 8 Gew.-Teile, insbesondere 1 Gew.-Teil bis 5 Gew.-Teile organischer Cobuilder, bis zu 8 Gew.-Teile, insbesondere 1 Gew.-Teil bis 5 Gew.-Teile Komplexbildner für Schwermetalle, bis zu 15 Gew.-Teile, insbesondere 3 Gew.-Teile bis 10 Gew.-Teile Waschalkalien sowie bis zu 5 Gew.-Teile, insbesondere 1 Gew.-Teil bis 3 Gew.-Teile Enzym, insbesondere Protease, Amylase, Lipase oder deren Gemische, eingesetzt werden.

5. Verfahren nach einem der Ansprüche 1 bis 4, dadurch gekennzeichnet, daß der Zeolith mindestens 2 Minuten, insbesondere 3 Minuten bis 5 Minuten, mit dem flüssigen Inertisierungsmittel getränkt wird.

6. Verfahren nach einem der Ansprüche 1 bis 5, dadurch gekennzeichnet, daß das Inertisierungsmittel ein flüssiges Polyethylenglykol mit einem Molekulargewicht im Bereich von 180 bis 650, vorzugsweise im Bereich von 350 bis 450, enthält.

7. Verfahren nach einem der Ansprüche 1 bis 5, dadurch gekennzeichnet, daß das Inertisierungsmittel einen flüssigen aromatischen Kohlenwasserstoff in Form eines Alkylbenzols mit insgesamt 1 bis 3 C-Atomen im Alkylrest beziehungsweise in den Alkylresten enthält.

8. Verfahren nach einem der Ansprüche 1 bis 5, dadurch gekennzeichnet, daß das Inertisierungsmittel einen flüssigen Ester aus Kohlensäure, Ameisensäure oder Essigsäure und einem linearen primären Alkohol mit 2 bis 4 C-Atomen enthält.

9. Verfahren nach einem der Ansprüche 6 bis 8, dadurch gekennzeichnet, daß das Inertisierungsmittel zusätzlich eine Menge von bis zu 2 Gew.-%, insbesondere 0,1 Gew.-% bis 1 Gew.-%, jeweils bezogen auf gesamtes Inertisierungsmittel, mindestens einer Carbonsäure mit 1 bis 3 C-Atomen enthält.

10. Verfahren nach einem der Ansprüche 1 bis 9, dadurch gekennzeichnet, daß das Inertisierungsmittel wasserlöslich ist und in 10-gewichtsprozentiger wäßriger Lösung einen pH-Wert im Bereich von 3 bis 7 aufweist.

11. Flüssiges bis pastenförmiges, bleichmittelhaltiges, im wesentlichen wasserfreies Waschmittel, enthaltend Zeolith NaA sowie anionisches und/oder nichtionisches Tensid, dadurch gekennzeichnet, daß es 5 Gew.-% bis 20 Gew.-% hydratisierten Zeolith NaA, über 50 Gew.-% bis 80 Gew.-% anionisches und/oder nichtionisches Tensid, 5 Gew.-% bis 20 Gew.-% aktivsauerstoffhaltiges Bleichmittel, bis zu 6 Gew.-%, insbesondere 1 Gew.-% bis 5 Gew.-% Bleichaktivator sowie bis zu 6 Gew.-%, insbesondere 1 Gew.-% bis 5 Gew.-% Cobuilder und/oder Komplexbildner für Schwermetalle enthält und das System aus Bleichmittel und Zeolith durch Tränken des Zeoliths mit einem bei Raumtemperatur und Normaldruck flüssigen, organischen, polaren Inertisierungsmittel, welches ein aliphatischer oder aromatischer Kohlenwasserstoff, ein Polydiol, ein Ester aus einer Carbonsäure mit 1 bis 3 C-Atomen und einem Alkohol mit 1 bis 4 C-Atomen, eine Carbonsäure mit 1 bis 3 C-Atomen oder ein Gemisch aus diesen ist, und welches bei 20 °C bis 25 °C eine Dielektrizitätskonstante von mindestens 2,3 aufweist, stabilisiert ist.

## Claims

1. A process for the production of stabilized, synthetic hydrated zeolite NaA, characterized in that the zeolite is impregnated with 3 times to 10 times the quantity, based on its weight, of an organic polar deactivating agent which is liquid at room temperature and normal pressure, has a dielectric constant at 20°C of at least 2.3 and consists of an aliphatic or aromatic hydrocarbon, a polydiol, an ester of a C₁₋₃ carboxylic acid and a C₁₋₄ alcohol, a C₁₋₃ carboxylic acid or a mixture thereof.

2. A process as claimed in claim 1, characterized in that the liquid deactivating agent is subsequently removed until the ratio by weight of zeolite to deactivating agent is 1:1 to 1:5.

3. A process for the production of a paste-form, stable, bleach-containing and substantially water-free detergent or cleaning composition, characterized in that
(a) a quantity of 10 parts by weight to 30 parts by weight of synthetic hydrated zeolite NaA is impregnated with
(b) 3 times to 10 times the quantity, based on the weight of the zeolite, of an organic, polar deactivating agent which is liquid at room temperature and normal pressure, has a dielectric constant at 20°C to 25°C of at least 2.3 and consists of an aliphatic or aromatic hydrocarbon, a polydiol, an ester of a C₁₋₃ carboxylic acid and a C₁₋₄ alcohol, a C₁₋₃ carboxylic acid or a mixture thereof,
(c) the liquid deactivating agent is removed until the ratio by weight of zeolite to deactivating agent is 5:1 to 1:1 and
(d) a quantity of 100 parts by weight to 150 parts by weight of anionic and/or nonionic surfactant,
(e) a quantity of 10 parts by weight to 30 parts by weight of bleaching agent,
(f) a quantity of up to 10 parts by weight of bleach activator and
(g) optionally other ingredients of detergents or cleaning compositions are incorporated,
all process steps being carried out at room temperature or at the temperature generated in the liquid or paste-form composition by the mechanical effect of the mixing process.

4. A process as claimed in claim 3, characterized in that quantities of 15 parts by weight to 25 parts by weight of zeolite, 45 parts by weight to 250 parts by weight of deactivating agent, 120 parts by weight to 150 parts by weight of surfactant, 12 parts by weight to 25 parts by weight of bleaching agent and 4 parts by weight to 8 parts by of weight bleach activator, up to 8 parts by weight and, more particularly, 1 part by weight to 5 parts by weight of organic co-builders, up to 8 parts by weight and, more particularly, 1 part by weight to 5 parts by weight of heavy metal complexing agents, up to 15 parts by weight and, more particularly, 3 parts by weight to 10 parts by weight of washing alkalis and up to 5 parts by weight, more particularly 1 part by weight to 3 parts by weight, of enzyme, more particularly protease, amylase, lipase or mixtures thereof, are used.

5. A process as claimed in any of claims 1 to 4, characterized in that the zeolite is impregnated with the liquid deactivating agent for at least 2 minutes and, more particularly, for 3 minutes to 5 minutes.

6. A process as claimed in any of claims 1 to 5, characterized in that the deactivating agent is a liquid polyethylene glycol having a molecular weight in the range from 180 to 650 and preferably in the range from 350 to 450.

7. A process as claimed in any of claims 1 to 5, characterized in that the deactivating agent contains a liquid aromatic hydrocarbon in the form of an alkylbenzene containing a total of 1 to 3 C atoms in the alkyl radical or in the alkyl radicals.

8. A process as claimed in any of claims 1 to 5, characterized in that the deactivating agent contains a liquid ester of carbonic acid, formic acid or acetic acid and a linear primary alcohol containing 2 to 4 C atoms.

9. A process as claimed in any of claims 6 to 8, characterized in that the deactivating agent additionally contains a quantity of up to 2% by weight and preferably 0.1 to 1% by weight, based on the deactivating agent as a whole, of at least one carboxylic acid containing 1 to 3 C atoms.

10. A process as claimed in any of claims 1 to 9, characterized in that the deactivating agent is soluble in water and has a pH value in the form of a 10% by weight aqueous solution in the range from 3 to 7.

11. A liquid to paste-form, bleach-containing and substantially water-free detergent or cleaning preparation containing zeolite NaA and anionic and/or nonionic surfactant, characterized in that it contains 5% by weight to 20% by weight of hydrated zeolite NaA, more than 50% by weight to 80% by weight of anionic and/or nonionic surfactant, 5% by weight to 20% by weight of active-oxygen-containing bleaching agent, up to 6% by weight and more particularly 1% by weight to 5% by weight by weight of bleach activator and up to 6% by weight and more particularly 1% by weight to 5% by weight of co-builders and/or heavy metal complexing agents and the system of bleaching agent and zeolite is stabilized by impregnation of the zeolite with an organic polar deactivating agent which is liquid at room temperature and normal pressure, has a dielectric constant at 20 to 25°C of at least 2.3 and consists of an aliphatic or aromatic hydrocarbon, a polydiol, an ester of a C₁₋₃ carboxylic acid and a C₁₋₄ alcohol, a C₁₋₃ carboxylic acid or a mixture thereof.

## Revendications

1. Procédé de fabrication de zéolithe NaA synthétique, hydratée et stabilisée, qui est caractérisé en ce que l'on imprègne la zéolithe avec une quantité représentant de 3 à 10 fois son poids d'un agent d'inertisation polaire, organique, liquide à température ambiante et à pression normale, qui représente un hydrocarbure aliphatique ou aromatique, un polydiol, un ester d'un acide carboxylique comportant 1 à 3 atomes de C et d'un alcool possédant 1 à 4 atomes de C, un acide carboxylique comportant 1 à 3 atomes de C, ou un mélange de ceux-ci, et qui présente à 20 °C une constante diélectrique d'au moins 2,3.

2. Procédé selon la revendication 1, caractérisé en ce que l'on élimine ensuite l'agent d'inertisation liquide, jusqu'à ce que le rapport pondéral entre la zéolithe et l'agent d'inertisation atteigne 1:1 à 1:5.

3. Procédé de fabrication d'un agent de lavage ou de nettoyage liquide à pâteux, stable, essentiellement anhydre, contenant des agents de blanchiment, qui est caractérisé en ce que l'on
(a) imprègne une quantité de 10 à 30 parties en poids de zéolithe NaA synthétique hydratée par
(b) une quantité représentant 3 à 10 fois le poids de la zéolithe d'un agent d'inertisation polaire, organique, liquide à température ambiante et à pression normale, qui représente un hydrocarbure aliphatique ou aromatique, un polydiol, un ester d'un acide carboxylique comportant 1 à 3 atomes de C et d'un alcool possédant 1 à 4 atomes de C, un acide carboxylique comportant 1 à 3 atomes de C, ou un mélange de ceux-ci, et qui présente à 20 °C une constante diélectrique d'au moins 2,3,
(c) on élimine éventuellement l'agent d'inertisation liquide, jusqu'à ce que le rapport pondéral entre la zéolithe et l'agent d'inertisation atteigne 5:1 à 1:1,
(d) on additionne par mélange une quantité de 100 à 150 parties en poids de tensioactif anionique et/ou non ionique,
(e) une quantité de 10 à 30 parties en poids d'agent de blanchiment,
(f) une quantité allant jusqu'à 10 parties en poids d'activateur de blanchiment et,
(g) le cas échéant, d'autres constituants d'agents de lavage ou de nettoyage,
toutes les étapes du procédé étant effectuées à température ambiante ou à la température de l'agent de lavage ou de nettoyage liquide ou pâteux, résultant de l'action mécanique au cours du processus de mélangeage.

4. Procédé selon la revendication 3, caractérisé en ce que l'on met en oeuvre 15 à 25 parties en poids de zéolithe, 45 à 250 parties en poids d'agent d'inertisation, 120 à 150 parties en poids de tensioactif, 12 à 25 parties en poids d'agent de blanchiment et 4 à 8 parties en poids d'activateur de blanchiment, jusqu'à 8 parties en poids, en particulier 1 à 5 parties en poids de co-adjuvant organique, jusqu'à 8 parties en poids, en particulier 1 à 5 parties en poids d'agent séquestrant pour les métaux lourds, jusqu'à 15 parties en poids, en particulier 3 à 10 parties en poids d'alcalis détergents, ainsi que jusqu'à 5 parties en poids, en particulier 1 à 3 parties en poids d'enzyme, en particulier, de la protéase, de l'amylase, de la lipase ou des mélanges de celles-ci.

5. Procédé selon au moins une des revendications 1 à 4, caractérisé en ce que la zéolithe est imprégnée du liquide d'inertisation, pendant au moins 2 minutes, en particulier pendant 3 à 5 minutes.

6. Procédé selon une des revendications 1 à 5, caractérisé en ce que l'agent d'inertisation contient un polyéthyléneglycol liquide possédant un poids moléculaire compris dans l'intervalle de 180 à 650, de préférence dans la plage de 350 à 450.

7. Procédé selon une des revendications 1 à 5, caractérisé en ce que l'agent d'inertisation contient un hydrocarbure aromatique liquide, sous la forme d'un alkylbenzéne comportant au total 1 à 3 atomes dans le radical ou dans les radicaux alkyle.

8. Procédé selon une des revendications 1 à 5, caractérisé en ce que l'agent d'inertisation contient un ester liquide d'acide carbonique, d'acide formique ou d'acide acétique et d'un alcool primaire linéaire comportant 2 à 4 atomes de C.

9. Procédé selon une des revendications 6 à 8, caractérisé en ce que l'agent d'inertisation contient en plus une quantité allant jusqu'à 2 % en poids, en particulier comprise entre 0,1 et 1 % en poids (dans chaque cas, par rapport à la totalité de l'agent d'inertisation) d'au moins un acide carboxylique comportant 1 à 3 atomes de C.

10. Procédé selon une des revendications 1 à 9, caractérisé en ce que l'agent d'inertisation est soluble dans l'eau et présente, en solution aqueuse à 10 pour cent, un pH compris dans l'intervalle de 3 à 7.

11. Agent de lavage liquide à pâteux, essentiellement anhydre, contenant des agents de blanchiment, renfermant de la zéolithe NaA ainsi qu'un surfactif anionique et/ou non ionique, caractérisé en ce qu'il contient 5 à 20 % en poids de zéolithe NaA hydratée, plus de 50 jusqu'à 80 % en poids de tensioactif anionique et/ou non ionique, 5 à 20 % en poids d'agent de blanchiment contenant de l'oxygène actif, jusqu'à 6 % en poids, en particulier, 1 à 5 % en poids d'activateur de blanchiment, ainsi que jusqu'à 6 %, en particulier 1 à 5 % en poids de co-adjuvant et/ou d'agent séquestrant pour les métaux lourds, et le système de l'agent de blanchiment et de la zéolithe étant stabilisé par imprégnation de la zéolithe par un agent d'inertisation polaire, organique, liquide à température ambiante et pression normale, qui représente un hydrocarbure aliphatique ou aromatique, un polydiol, un ester d'un acide carboxylique comportant 1 à 3 atomes de C et d'un alcool possédant 1 à 4 atomes de C, un acide carboxylique comportant 1 à 3 atomes de C ou un mélange de ceux-ci, et présentant, entre 20 et 25 °C, une constante diélectrique d'au moins 2,3.
